# EUROPEAN PATENT APPLICATION

(11) **EP 4 672 114 A1**
(43) Date of publication of application: **31.12.2025**
(21) Application number: 25183182.2
(22) Date of filing: 17.06.2025
(51) Int. Cl.: G06Q 10/20, G06F 1/16

(54) **PORTABLE SYSTEMS AND METHODS FOR MONITORING MAINTENANCE EVENTS FOR AIRCRAFTS**

(30) Priority: 24.06.2024 US 202463663446 P; 15.01.2025 US 202519022768
(71) Applicant: The Boeing Company, Arlington, VA 22202 (US)
(72) Inventor: ZONG, Zu Sheng, Arlington, 22202 (US); TAN, Kai-Li, Arlington, 22202 (US); SADIK, Md Nafize, Arlington, 22202 (US); LAM, Ka Man, Arlington, 22202 (US); NAZARALI, Sakina, Arlington, 22202 (US); FOUAD, Michael, Arlington, 22202 (US); HO, Alan Ying Lun, Arlington, 22202 (US); STEPHENRAJ, John, Arlington, 22202 (US); LANGILLE, Anni Sarah, Arlington, 22202 (US); BELLEMARE-DAVIS, Alexander, Arlington, 22202 (US)
(74) Representative: Plasseraud IP

(57) **Abstract**

A portable monitoring system (102) and a method includes a control unit (104) having one or more processors that can access one or more technical specifications (122) associated with a maintenance event of an aircraft (101). The maintenance event includes one or more steps that are to be completed by an operator to complete the maintenance event. The portable monitoring system (102) includes one or more sensors (108) that obtain data during the maintenance event of the aircraft (101). The data is associated with one or more actions of the operator and/or one or more characteristics of the aircraft (101) during the maintenance event. The data includes two or more different types of modalities. The control unit (104) monitors the maintenance event based in part on the data obtained by the sensors (108) during the maintenance event and at least one of the technical specifications (122).

## Description

### CROSS-REFERENCE TO RELATED APPLICATIONS

This application claims priority to U.S. Provisional Application No. 63/663,446 (filed 24-June-2024).

### FIELD OF THE DISCLOSURE

Examples of the present disclosure generally relate to portable or wearable monitoring systems and methods for monitoring maintenance or inspection events of aircrafts.

### BACKGROUND OF THE DISCLOSURE

Ensuring that aircraft maintenance tasks are performed according to specific manuals, such as Aircraft Maintenance Manuals (AMMs), is critical to aviation efficiency, safety, and the fulfillment of regulatory obligations. Mechanics must strictly follow predefined procedures in the specific manuals that are approved by regulatory bodies when conducting aircraft maintenance and repair. Deviations from the steps outlined in the manuals may pose safety and/or quality risks. Therefore, it is important to ensure that maintenance procedures are adhered to and maintenance actions and activities are audited to ensure safety and avoid costly rework.

In some instances, the quality of aircraft maintenance work relies on peer monitoring and post-maintenance functional testing. Human monitoring is costly, is difficult to scale-up, and is prone to error. Moreover, post-maintenance testing results do not guarantee the tasks are performed according to the regulatory approved procedures and steps. For example, the system may work normally for a shortly period of time before breaking down if the maintenance work is not carried out correctly. Additionally, post-maintenance verification can be slow to provide feedback. Often, the damage is done when the issues are identified.

In other instances, various solutions of computer vision validation have been developed. These may be single-photograph solutions (e.g., static) or video solutions (e.g., dynamic). One issue with these validation solutions is the amount of training they require. For example, single-mode models may have additional experience or leaning on which to base their training, which may be similar in spirit to showing a person still photographs or videos and, without context, explanation, or sound, labeling some of these images and/or videos as incorrect. It would take considerable time for a person relying on these labels to discern the core patterns on what the distinct events or processes are, what the acceptable orders are, what conditions and/or states are to be distinguished, and so forth.

Single-mode models may be acceptable for finite operations or finite distinguishable states (e.g., there is only one correct way to stack a box and only one incorrect way to stack a box). However, in highly complex, diverse operations, such as replacing landing gear of an aircraft or assembling the wing of the aircraft, the training and testing costs become prohibitive as every single operation must be trained. There are several thousands of fault isolation procedures, maintenance manual procedures, structural repair procedures, etc., and single-mode computer vision model would require dedicated training and testing on every single one to establish coverage.

### SUMMARY OF THE DISCLOSURE

A need exists for a portable, wearable, video-enabled multimodal artificial intelligence systems that is empowered by technical specifications and maintenance documents, for use by aircraft maintenance personnel, that can be used in monitoring real-time procedural compliance and/or validation monitoring, or other assistant use cases.

With those needs in mind, certain examples of the present disclosure provide a portable monitoring system that includes a control unit having one or more processors that can access one or more technical specifications associated with a maintenance event of an aircraft. The maintenance event may include one or more steps that are to be completed by an operator to complete the maintenance event. The portable monitoring system includes one or more sensors that obtain data during the maintenance event of the aircraft. The data is associated with one or more actions of the operator and/or one or more characteristics of the aircraft during the maintenance event. The data includes two or more different types of modalities. The control unit monitors the maintenance event based in part on the data obtained by the sensors during the maintenance event and at least one of the technical specifications.

In at least one example, the two or more different types of modalities can include video, text, audio, image, and/or touch. In another example, the control unit can examine completion of the one or more steps of the maintenance event by the operator based on each of the two or more different types of modalities of the data.

In at least one example, the portable monitoring system may include an output device that is operably coupled with the control unit. The control unit may communicate with the operator during the maintenance event via the output device. In at least one example, the control unit may communicate one or more instructions to the operator for the operator to complete one or more of the one or more steps of the maintenance event.

In at least one example, the control unit may confirm the completion of the one or more steps of the maintenance event. In at least one example, the control unit can identify that at least one of the one or more steps of the maintenance event was completed incorrectly relative to a completion threshold of the at least one technical specification. The control unit can communicate a notification to the operator via an output device responsive to identifying that the at least one step was completed incorrectly. The notification can include a corrective action recommendation for the operator complete in order to remedy the at least one step that was completed incorrectly. In at least one example, the step that was completed incorrectly may be a first step. The control unit may communicate a notification to the operator responsive to the operator completing the first step incorrectly and prior to the operator starting a sequential second step.

In at least one example, the one or more sensors and the control unit may be operably coupled with a body that may be worn by and/or coupled to the operator during the maintenance event.

In at least one example, the control unit may be an artificial intelligence (AI) or machine-learning system.

Certain examples of the present disclosure provide a method that includes accessing one or more technical specifications associated with one or more of a maintenance event of an aircraft, and obtaining data with one or more sensors of a portable monitoring system during the maintenance event of the aircraft. The data is associated with one or more actions of an operator or one or more characteristics of the aircraft during the maintenance event. The data includes two or more different types of modalities. The maintenance event is monitored based at least in part on the data obtained by the one or more sensors during the maintenance event and at least one of the one or more technical specifications.

Certain examples may also provide a wearable or portable monitoring system that includes a body that is to be worn by and/or coupled to an operator during a maintenance or inspection event of an aircraft. A control unit including one or more processors is operably coupled with the body. The control unit wirelessly accesses one or more technical specifications associated with the aircraft and/or the maintenance or inspection event of the aircraft. One or more steps of the maintenance or inspection event are included in at least one of the one or more technical specifications. One or more sensors are operably coupled with the body and obtain data during the maintenance or inspection event. The data is associated with one or more of actions of the operator or one or more characteristics of the aircraft during the maintenance or inspection event. The data includes two or more different types of modalities. The control unit monitors the maintenance or inspection event based at least in part on the data obtained by the sensors during the maintenance or inspection event and at least one of the technical specifications.

### BRIEF DESCRIPTION OF THE DRAWINGS

Figure 1 illustrates a schematic block diagram of a system, according to an example of the present disclosure.
Figure 2 illustrates examples of a portable monitoring system, according to an example of the present disclosure.
Figure 3 illustrates a flow chart of a method, according to an example of the present disclosure.
Figure 4 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

The systems and methods described herein provide a portable and/or wearable, video-enabled monitoring system that includes processors configured to utilize a multimodal artificial intelligence system to automatically audit a mechanics work against a step-by-step procedure and relevant requirements defined in technical specifications, such as Aircraft Maintenance Manuals. The portable monitoring systems may contain a pre-trained multi-modal model (e.g., text and vision), wherein neural net may associate imagery and/or video and text semantic patterns. The monitoring systems may also be connected to and/or have access to technical publications to establish context. For example, the portable monitoring systems trades text knowledge gleaned from the technical specifications for video knowledge, minimizing the amount of video training and testing required, and maximizing its ability to generalize to a multitude of maintenance actions and/or operations relative to single-mode models.

The portable monitoring system receives, obtains, accesses, or the like, temporal and multimodal signals from video, audio, text, or the like, and determines if an action is conducted by the operator based on coherent evidence illustrating a sequential process characteristics by a start state, transition intervention, and an altered end state. If a step is skipped by the operator, or is not performed correctly, the portable monitoring system emits a real-time notification or alert, and may assist the operator to rectify the deviations as required.

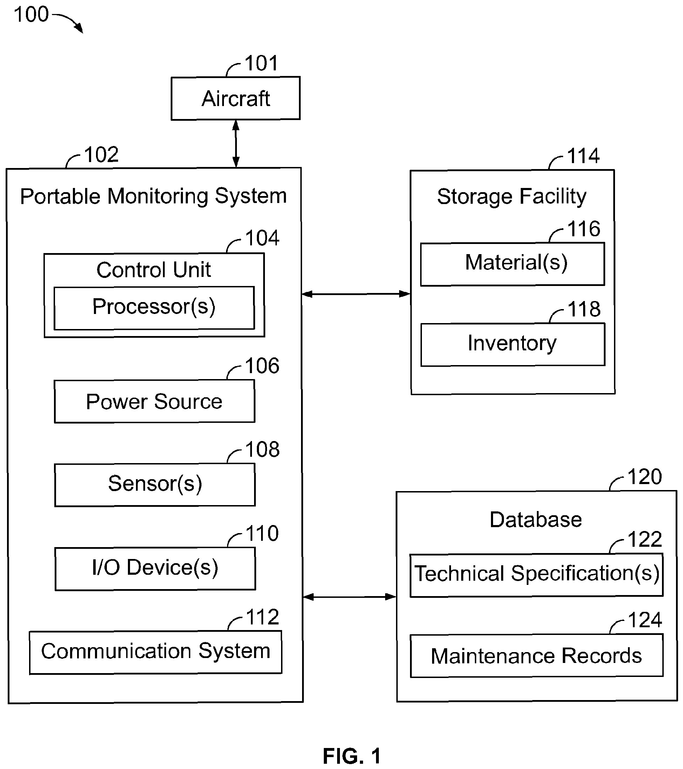

Figure 1 illustrates a block diagram of a system 100, according to an example of the present disclosure. The system 100 shown in Figure 1 is merely exemplary, and nonlimiting.

The system 100 includes a portable monitoring system 102 that includes a control unit 104 having one or more processors. In at least one example, the control unit 104 is an artificial intelligence or machine learning system. In at least one example, the portable monitoring system 102 may be worn by, coupled to, carried by, or the like, an operator, such as a maintenance operator. For example, the portable monitoring system 102 may be moved from one location to another, may be a wireless device, or the like. In at least one example, the portable monitoring system 102 may be referred to as a portable wearable system, a wearable monitoring device, a smart wearable device, or the like.

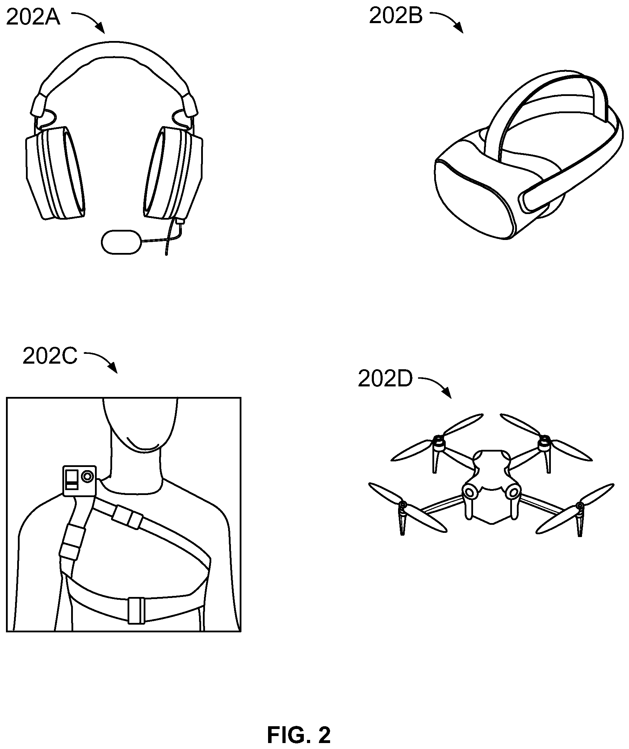

Figure 2 illustrates examples of portable monitoring systems, according to examples of the present disclosure. For example, the portable monitoring system 102 may include a body having a structure, shape, and/or style that may be similar to a headset 202A, a virtual reality headset 202B, a body camera system 202C, a droid 202D, or the like. For example, the portable monitoring system 102 may have one or more features and/or elements that allow the operator to wear the portable monitoring system 102, such as during an inspection and/or maintenance event of an aircraft 101, of a system of the aircraft 101 (e.g., the landing gear, the propulsion system, or the like), or the like. The various examples of the portable monitoring systems 202A-D illustrated in Figure 2 are exemplary only, and are thus not limiting as to the types of wearable and/or portable monitoring systems that may be used for monitoring an operator and/or the aircraft during an inspection or maintenance event.

Returning to Figure 1, the portable monitoring system 102 includes a power source 106 that can represent a battery or an alternative energy source that may provide power to the portable monitoring system 102. The portable monitoring system 102 also includes one or more input/output device(s) 110 (shown as "I/O Device(s) in Figure 1). The I/O devices 110 can include and/or represent a display (e.g., an electronic monitor, a television, a touch screen, or the like), a keyboard, a headset, a microphone, an electronic mouse, a stylus, and/or the like. The I/O device 110 may be configured to show visual graphics, videos, text, and/or the like.

The portable monitoring system 102 may be in communication with a remote database 120 via a communication system 112. The communication system 112 may can include and/or represent one or more antennas, transceivers, radios, and/or the like, that enable wired and/or wireless communication between the systems of the portable monitoring system 102, between the portable monitoring system and the aircraft 101, between the portable monitoring system and the remote database 120, between the portable monitoring system and a storage facility 114 (e.g., that may store replacement materials 116, inventory 118, tools, or the like), or the like.

In at least one example, the remote database 120 may represent and/or include a data storage unit, such as a memory, that stores and/or has access to technical publications or specifications 122, historical maintenance records 124, or the like. In one example, the remote database 120 may be a physical location, or alternatively may be a cloud-based data storage system. The technical specifications 122 may include and/or represent defined procedures (e.g., maintenance procedures, assembly procedures, or the like), manuals (e.g., manuals that may be approved by regulatory bodies when conducting aircraft maintenance and/or repair), or the like. For example, the technical specifications 122 may include, but are not limited to, Fault Isolation Manuals (FIM), Aircraft Maintenance Manuals (AMM), Structure Repair Manuals (SRM), Aircraft Illustrated Parts Catalogs (AIPC), or the like, of specific original equipment manufacturers (OEMs).

The portable monitoring system 102 includes one or more sensors 108 that may sense or otherwise detect information. In one or more examples, the sensors may be and/or include cameras (e.g., cameras that capture still and/or video images), microphones, motion sensors, thermal sensors, vibrational sensors, pressure sensors, or the like. In at least one example, one or more of the sensors 108 may include and/or represent a global positioning system sensor, a radar sensor, or the like. The sensors 108 may be embedded in a portion of a body of the portable monitoring system 102, may be operably coupled with an exterior portion of the body of the portable monitoring system 102, or the like.

In at least one example, the sensors 108 may detect information from the operator performing maintenance on the aircraft 101, information about the aircraft, such as the portion of the aircraft being maintained, ambient information of an area surrounding the aircraft (e.g., ambient temperatures, pressures, humidity, etc.), information about tools or equipment that the operator is using to perform the maintenance (e.g., drills, hammers, etc.), information about maintenance actions being completed (e.g., fluid discharge, depressurization of a system, or the like), or the like. For example, the sensors 108 may sense or detect characteristics associated with different systems/devices of the aircraft 101 and about the maintenance that is being completed.

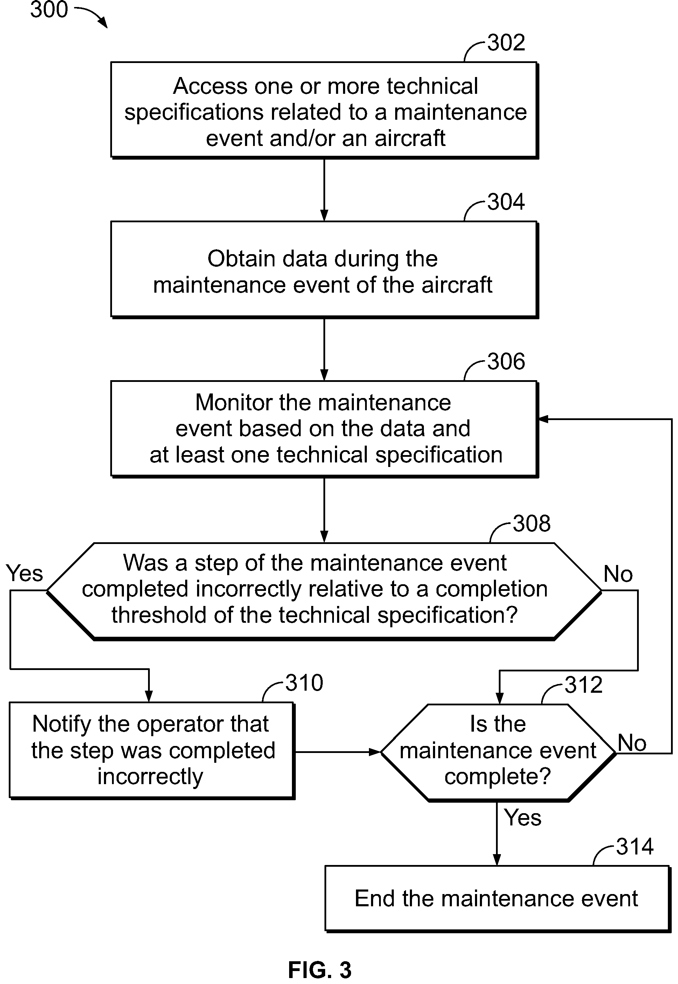

Figure 3 illustrates a flow chart 300 of a method, according to an example of the present disclosure. Referring to Figure 1, an individual or operator may be wearing and/or using the portable monitoring system 102, such as for a maintenance, inspection, and/or repair event of the aircraft 101. At 302, one or more technical specifications 122 may be accessed and/or received by the control unit 104 from the remote database 120. The technical specifications 122 may be associated with the maintenance work that is to be completed, with the systems and/or devices of the aircraft 101 being maintained, inspected, and/or repaired, historical maintenance records of the aircraft 101, or the like.

In at least one example, the maintenance event may include one or more procedural steps that the operator needs to complete in order to complete the maintenance event. In one example, two or more of the steps may be sequential, such that the operator cannot move onto a second step until the first step has been completed.

At 304, data may be obtained by the one or more sensors 108 while the operator is conducting the maintenance event. For example, the sensors 108 may represent cameras that may capture images of maintenance work that is being completed or has been done, may represent microphones that capture sounds associated with the work being completed (e.g., the sound of tools being used, audio from the operator, or the like), or the like. As one example, the sensors 108 may include sensing devices that may sense characteristics of the aircraft 101 (e.g., pressure readings, volumetric information, force data, fluid levels, fluid temperatures, or the like).

At 306, the control unit 104 monitors the maintenance event and work completed by the operator during the maintenance event based on the data obtained by the sensors 108 and in view of at least one of the technical specifications 122. For example, the control unit 104 may monitor the work being completed by the operator to ensure the operator is adhering to one or more directives of the procedures in the technical specifications 122.

As described herein, the control unit 104 may monitor the work being completed by the maintenance operator, in light of or in view of the technical specifications 122, based on different types of modality of the data and/or information obtained by the sensors 108. Additionally, the different types of modality may be from one or more different sources (e.g., the operator, the tools being used, the portion of the aircraft being maintained or repaired, etc.). For example, the different types of modality may include and/or represent video (e.g., video details of the maintenance work that the operator has completed), text (e.g., the prescribed maintenance actions and/or steps as specified in the technical specifications 122), audio (e.g., the mechanics narration, audible status signals from troubleshooting and/or tests, noises from tooling or noises as a result of maintenance actions, like depressurization, fluid discharge, etc.), image (e.g., tooling images, part drawings and/or diagrams according to the technical specifications 122, historical maintenance records, etc.), or data associated with one or more characteristics of the aircraft 101 (e.g., pressure readings, volumetric information, force data, fluid levels, fluid temperatures, or the like). Optionally, one or more additional types of modality may be used and/or relied upon by the control unit 104 to monitor the completion of work being completed. Additionally, according to another example, the control unit 104 may be configured to communicate directly with the tools used during the maintenance event. The tools may include smart tools equipped with communication modules, such as but not limited to torque wrenches, drills, diagnostic devices, etc., that are capable of wirelessly transmitting data to the control unit 104 via the communication system 112. The data received from the tools may include operational parameters such as but not limited to applied torque, rotational speed, pressure levels, diagnostic test results, etc. For instance, during the replacement of a landing gear, the control unit 104 may receive real-time data from a smart tool (e.g. a torque data from a wrench) to ensure that replacement complies with the technical specifications 122. Additionally, the control unit 104 may provide feedback or instructions to the operator via the output device 110 if the tool's operation deviates from the required parameters, ensuring compliance with procedural standards.

In at least one example, the control unit 104 can leverage the different types of modality in monitoring the completion of the maintenance work being completed, such as through artificial intelligence. For example, the artificially intelligent control unit 104 can receive the data in different forms (e.g., video, text, audio, image, touch, etc.) and/or from different sources (e.g. the operator, the aircraft 101, the technical specifications 122, or the like). The different types of modality may allow the control unit 104 to better monitor and/or judge if the maintenance work being completed is correct, if the work is in compliance or not in compliance, if the completed work is sufficient or insufficient, if the work meets regulatory standards and/or threshold requirements, or the like, relative to a control unit 104 relying on a single type of modality.

In at least one example, the control unit 104 of the portable monitoring system 102 may communicate with the operator, such as by the I/O device(s) 110, before and/or during the maintenance event. For example, the operator may select the technical specification 122 to be followed and/or request assistance from the control unit 104 (e.g., a verbal request into a microphone, by actuating a touchscreen or alternative button, or the like). The request for assistance may be for the procedural steps of the maintenance event according to the technical specification 122. As one example, the control unit 104 may display a portion of the technical specification 122 to the operator via a display device (e.g., display a portion of the text, display videos and/or images associated with the step, etc.). In another example, the I/O device may be a speaker and the control unit 104 may audibly provide the procedural steps to the operator.

In at least one example, the maintenance work may require the operator to replace one or more structures and/or materials from the aircraft 101, may require the operator to use a specific tool to complete a task, or the like. The control unit 104 may communicate with the storage facility 114 to understand if the structures and/or materials needed for the maintenance or repair work are available, if the specific tools are available, or the like. In at least one example, the control unit 104 may communicate with the operator to indicate if the replacement materials and/or tools are available, an estimated time at which the materials will be available, a location where the materials and/or tools may be located (e.g., a location within the storage facility 114, a location outside of the storage facility, or the like).

At 308, a determination is made if a step of the maintenance event was completed correctly or incorrectly relative to a completion threshold, a regulatory standard, or the like, of the technical specification 122. For example, the control unit 104 may judge and/or score work that the operator has completed and determine if the work that was completed meets and/or exceeds the regulatory standard, a completion threshold, or the like. Additionally, the control unit 104 may judge and/or score work that the operator has completed in real time.

For example, the portable monitoring system 102 may be monitoring and/or auditing a process, such as removal and replacement of a landing gear of the aircraft 101, assembly of aircraft wings, or the like. According to the corresponding technical specification(s) 122 associated with the removal and replacement of the landing gear, the process requires multiple actions and/or steps which, when completed, result in a state change (e.g., the changing of the landing gear). The control unit 104 monitors a first step completed by the operator according to the technical specification, and determines if the first step was completed correctly or incorrectly relative to a completion threshold of the technical specification. As another example, the control unit 104 determines a completion score and/or judgement for the work that was completed by the operator at the first step, and determines if the completion score meets a completion score threshold according to the technical specification 122.

The different types of modality of the data sensed by the sensors 108 and/or obtained by the control unit 104 may be used by the control unit 104 to determine if the action(s) and/or process(es) completed by the operator meet and/or exceed the completion threshold requirement for the corresponding step or action. For example, rather than determining if the first step was completed correctly based on a single stationary state (e.g., the new landing gear is in place), the control unit 104 relies on the multi-modality data associated with the actions and/or processes that the operator did in completing the first step (e.g., how the operator removed the landing, how the operator installed the new landing gear, etc.).

Rather than determining if the step or action was completed correctly based on a single state (e.g., the new landing gear is in place), the control unit 104 also examines specific actions the operator took in replacing the landing gear. For example, the portable monitoring system 102 may audit the process by which the operator completes the first step, and may determine whether a portion of the process by which the operator completed the first step was done correctly, was done well enough, or the like, relative to a completion threshold or standard according to the technical specification 122. For example, it may appear that the new landing gear is correctly installed, but the operator may have completed a portion of the process in a manner that does not meet a completion threshold or standard, which thereby may compromise the installed state of the landing gear.

If the control unit 104 determines that the step of the maintenance event was completed incorrectly, did not meet a completion threshold, or the like, flow of the method proceeds toward 310. At 310, the operator may be notified that the step was completed incorrectly, that a portion of the process by which the operator completed the step was done incorrectly or below a standard threshold, or the like. For example, the control unit 104 may communicate with the operator via the I/O device 110, such as to sound an alarm, display a notification on a display screen, vibrate, or the like.

In at least one example, the notification may include a corrective action recommendation or instructions for the operator in order for the operator to remedy the step that was completed incorrectly, did not meet a completion standard or threshold, or the like. In at least one example, the operator may be required to remedy the step that was completed incorrectly or did not meet a completion threshold before the operator can move on to the next step of the maintenance procedure. For example, the operator may be required to correct the first step before moving on to a subsequent second step of the procedure.

In at least one example, the control unit 104 may also communicate an alert or notification to a maintenance workstation and/or a managerial individual. For example, the notification may indicate that the operator has completed a portion of a step incorrectly or completed it below a threshold or standard. The operator may need to demonstrate to the managerial individual that the first step has been remedied before the managerial individual approves allowing the operator to move to the subsequent sequential second step.

In at least one example, the control unit 104 may continuously receive live video associated with the work being completed by the operator, and may detect in real-time if any of the maintenance steps are missed, if the steps are correctly performed to meet nuanced criteria (e.g., specific pressure, volume, torque, etc.), or the like. If the control unit 104 detects any non-conformance in the work (based on the multi-modality of the data, the technical specifications, etc.), the portable monitoring system 102 can alert the operator about the omission, may provide assistance in remedying the situation, or the like. For example, the real-time alerting and feedback by the portable monitoring system 102 may eliminate mistakes made by the operator relative to an alternative monitoring system, such as one that does not provide real-time feedback, one that does not rely on different types of modality of data in examining work that is completed, or the like.

Returning to step 308, if the step of the maintenance event was completed correctly, or met a completion threshold or standard, flow of the method proceeds to 312. At 312, a determination is made if the maintenance event is complete. For example, the control unit 104 may determine if all of the steps of a particular maintenance or repair event are completed based on the one or more technical specifications 122. If the maintenance event is not completed, flow of the method returns to 306, and the portable monitoring system 102 continues to monitor and/or audit the maintenance work being completed by the operator. Alternatively, if the maintenance event is complete, flow of the method proceeds toward 314, and the maintenance event is ended and the portable monitoring device ends or stops monitoring the event.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 104 of the portable monitoring system 102 may be or include one or more processors that are configured to control one or more operations, as described herein.

The control unit 104 of the portable monitoring system 102 is configured to execute a set of instructions that are stored in one or more data storage units or elements (such as the one or more memories), in order to process data. For example, the control unit 104 may include or be coupled to one or more memories. The data storage units may also store data or other information as desired or needed. The data storage units may be in the form of an information source or a physical memory element within a processing machine.

The set of instructions may include various commands that instruct the control unit 104 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 104 of the portable monitoring system 102. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 104 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-3, examples of the subject disclosure provide systems and methods that allow large amounts of data to be quickly and efficiently analyzed by a computing device. For example, the control unit 104 can receive and analyze the hundreds, thousands, millions, or more data and/or records that may be in the form of different types of modalities. The control unit 104 may also access and/or receive hundreds, thousands, millions, or more, technical specifications or publications, and may analyze the data associated with the real-time maintenance work being completed based on the technical specifications. As such, large amounts of data, which may not be discernable by human beings, are being tracked and analyzed. The vast amounts of data are efficiently organized and/or analyzed by the control unit 104, as described herein. The control unit 104 analyzes the data in a relatively short time in order to quickly and efficiently code, decode, and execute datalink messages. A human being would be incapable of efficiently analyzing such vast amounts of data in such a short time. As such, examples of the present disclosure provide increased and efficient functionality, and vastly superior performance in relation to a human being analyzing the vast amounts of data.

In at least one example, components of the system 100, such as the control unit 104 of the portable monitoring system 102, provide and/or enable a computer system to operate as a special computer system for monitoring and/or auditing maintenance, inspection, and/or repair work completed by a human operator. The control unit 104 of the portable monitoring system 102 improves upon standard computing devices by monitoring such work completed by an operator via multiple types of modality and automatically communicating with individuals (such as maintenance operators, managerial individuals, operators of aircraft, etc.) in an efficient and effective manner.

In at least one example, the control unit 104 of the portable monitoring system 102 uses machine learning algorithms which automatically analyze the different types of modality associated with the data sensed and/or the technical specifications 122 or maintenance records 124 to automatically audit a mechanics work in real-time against step-by-step procedures and relevant requirements defined in the technical specifications. In at least one example, all or part of the systems and methods described herein may be or otherwise include an artificial intelligence (AI) or machine-learning system that can automatically perform the operations of the methods also described herein. For example, the processors of the control unit 104 can be an artificial intelligence or machine learning system. These types of systems may be trained from outside information and/or self-trained to repeatedly improve the accuracy with how data is analyzed. Over time, these systems can improve by determining such information with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data.

Based on this feedback, the systems may be trained by adjusting one or more parameters, weights, rules, criteria, or the like, used in the analysis of the same. This process can be performed using the data and ensemble data instead of training data, and may be repeated many times to repeatedly improve the monitoring and auditing performed by the control unit 104. The training minimizes conflicts and interference by performing an iterative training algorithm, in which the systems are retrained with an updated set of data (for example, data received during multiple different maintenance events of a common aircraft 101, of a common system of different aircrafts, different maintenance events by the same operator, etc.) and based on the feedback examined prior to the most recent training of the systems. This provides a robust analysis model that can better determine situational information in a cost effective and efficient manner.

For example, the systems may be adapted to different use cases depending on the overall task and step complexity of the work being completed. The detection of the maintenance steps may involve sequentially sampling image frames from a video. The sampling frequency may be a tunable parameter that may be tailored for various cases. Additionally, the number of temporal frames that may be passed to the AI system, and/or the number of overlapping frames, can be optimized according to specific use cases to achieve the best model detection performance.

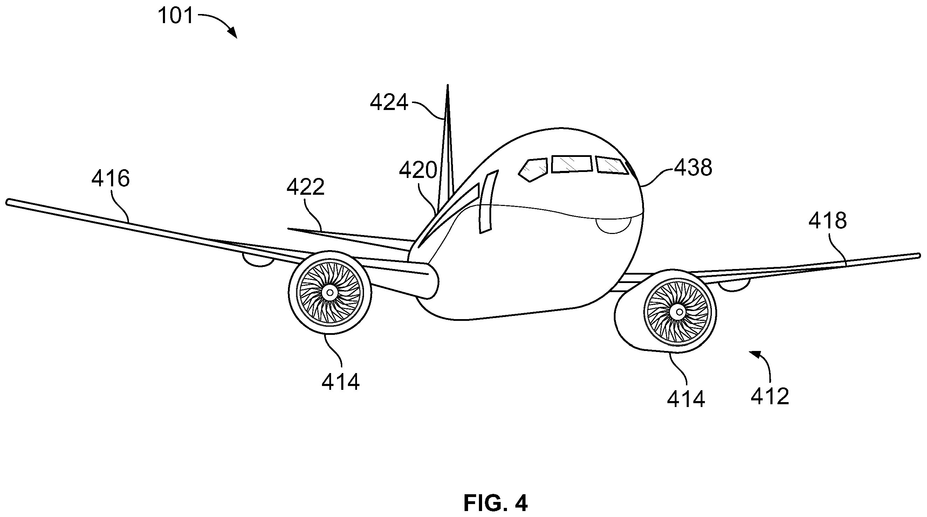

Figure 4 illustrates a perspective front view of the aircraft 101, according to an example of the present disclosure. The aircraft 101 includes a propulsion system 412 that includes engines 414, for example. Optionally, the propulsion system 412 may include more engines 414 than shown. The engines 414 are carried by wings 416 of the aircraft 101. In other examples, the engines 414 may be carried by a fuselage 418 and/or an empennage 420. The empennage 420 may also support horizontal stabilizers 422 and a vertical stabilizer 424. The fuselage 418 of the aircraft 101 defines an internal cabin, which includes a flight deck or cockpit, one or more work sections (for example, galleys, personnel carry-on baggage areas, and the like), one or more passenger sections (for example, first class, business class, and coach sections), one or more lavatories, and/or the like. Figure 4 shows an example of an aircraft 101. It is to be understood that the aircraft 101 can be sized, shaped, and configured differently than shown in Figure 4.

Optionally, examples of the present disclosure can be used with various other types of vehicles, such as automobiles, trains, watercraft, spacecraft, or the like. Also, optionally, examples of the present disclosure can be used with various other devices, systems, components, or the like other than vehicles. For example, examples of the present disclosure can be used with household appliances, industrial power systems and/or equipment, or the like.

Further, the disclosure comprises examples according to the following clauses:
Clause 1: a portable monitoring system, comprising:
   a control unit including one or more processors configured to access one or more technical specifications associated with a maintenance event of an aircraft, the maintenance event including one or more steps configured to be completed by an operator to complete the maintenance event; and
   one or more sensors configured to obtain data during the maintenance event of the aircraft, the data being associated with one or more of actions of the operator or one or more characteristics of the aircraft during the maintenance event, the data including two or more different types of modalities,
   wherein the control unit is configured to monitor the maintenance event based at least in part on the data obtained by the one or more sensors during the maintenance event and at least one of the one or more technical specifications.
Clause 2: the portable monitoring system of clause 1, wherein the two or more different types of modalities includes one or more of video, text, audio, image, or touch.
Clause 3: the portable monitoring system of clauses 1 or 2, wherein the control unit is configured to examine completion of the one or more steps of the maintenance event by the operator based on each of the two or more different types of modalities of the data.
Clause 4: the portable monitoring system of any of clauses 1-3, further comprising an output device operably coupled with the control unit, wherein the control unit is configured to communicate with the operator during the maintenance event via the output device.
Clause 5: the portable monitoring system of clause 4, wherein the control unit is configured to communicate one or more instructions to the operator for the operator to complete one or more of the one or more steps of the maintenance event.
Clause 6: the portable monitoring system of any of clauses 1-5, wherein the control unit is configured to confirm the completion of the one or more steps of the maintenance event.
Clause 7: the portable monitoring system of any of clauses 1-6, wherein the control unit is configured to identify that at least one of the one or more steps of the maintenance event was completed incorrectly relative to a completion threshold of the at least one of the one or more technical specifications.
Clause 8: the portable monitoring system of clause 7, further comprising an output device operably coupled with the control unit, wherein the control unit is configured to communicate a notification to the operator responsive to identifying that the at least one of the one or more steps was completed incorrectly.
Clause 9: the portable monitoring system of clause 8, wherein the notification is configured to include a corrective action recommendation for the operator to complete in order to remedy the at least one of the one or more steps that was completed incorrectly.
Clause 10: the portable monitoring system of clause 8, wherein the at least one of the one or more steps that is completed incorrectly is a first step, wherein the control unit is configured to communicate the notification to the operator responsive to the operator completing the first step incorrectly and prior to the operator starting a sequential second step.
Clause 11: the portable monitoring system of any of clauses 1-10, wherein the one or more sensors and the control unit are operably coupled with a body, wherein the body is configured to be one or more of worn by or coupled to the operator during the maintenance event.
Clause 12: the portable monitoring system of any of clauses 1-11, wherein the control unit is an artificial intelligence (AI) or machine-learning system.
Clause 13: a method, comprising:
   accessing one or more technical specifications associated with one or more of a maintenance event of an aircraft;
   obtaining data with one or more sensors of a portable monitoring system during the maintenance event of the aircraft, the data being associated with one or more of actions of an operator or one or more characteristics of the aircraft during the maintenance event, the data including two or more different types of modalities; and
   monitoring the maintenance event based at least in part on the data obtained by the one or more sensors during the maintenance event and at least one of the one or more technical specifications.
Clause 14: the method of clause 13, further comprising examining completion of one or more steps of the maintenance event based on each of the two or more different types of modalities of the data.
Clause 15: the method of clauses 13 or 14, further comprising:
   identifying that at least one of one or more steps of the maintenance event was completed incorrectly relative to a completion threshold of the at least one of the one or more technical specifications; and
   communicating a notification to the operator responsive to identifying that the at least one of the one or more steps was completed incorrectly.
Clause 16: a wearable or portable monitoring system, comprising:
   a body configured to be one or more of worn by or coupled to an operator during a maintenance or inspection event of an aircraft;
   a control unit including one or more processors operably coupled with the body, the control unit configured to configured to wirelessly access one or more technical specifications associated with one or more of the aircraft or the maintenance or inspection event of the aircraft, wherein one or more steps of the maintenance or inspection event are included in at least one of the one or more technical specifications; and
   one or more sensors operably coupled with the body, the one or more sensors configured to obtain data during the maintenance or inspection event, the data being associated with one or more of actions of the operator or one or more characteristics of the aircraft during the maintenance or inspection event, the data including two or more different types of modalities,
   wherein the control unit is configured to monitor the maintenance or inspection event based at least in part on the data obtained by the one or more sensors during the maintenance or inspection event and the at least one of the one or more technical specifications.
Clause 17: the wearable or portable monitoring system of clause 16, wherein the control unit is configured to examine completion of the one or more steps of the maintenance or inspection event by the operator based on each of the two or more different types of modalities of the data.
Clause 18: the wearable or portable monitoring system of clauses 16 or 17, further comprising an output device operably coupled with the body, wherein the control unit is configured to communicate with the operator during the maintenance or inspection event via the output device.
Clause 19: the wearable or portable monitoring system of any of clauses 16-18, further comprising an output device operably coupled with the body,
   wherein the control unit is configured to identify that at least one of the one or more steps of the maintenance or inspection event was completed incorrectly relative to a completion threshold of the at least one of the one or more technical specifications, and
   wherein the control unit is configured to communicate a notification to the operator responsive to identifying that the at least one of the one or more steps was completed incorrectly.
Clause 20: the wearable or portable monitoring system of clause 19, wherein the at least one of the one or more steps that is completed incorrectly is a first step, wherein the control unit is configured to communicate the notification to the operator responsive to the operator completing the first step incorrectly and prior to the operator starting a sequential second step.

As described herein, examples of the present disclosure provide systems and methods for a hands-free communication system between systems onboard the aircraft and/or systems off-board the aircraft. The hands-free communication systems of the aircraft can allow a pilot to communicate directly with an operator off-board the aircraft, to update and/or enter information or data stored within one or more systems onboard the aircraft, or the like, without the pilot needing the physically engage with one or more knobs, switches, buttons, touchscreens, or the like, of the aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A portable monitoring system (102), comprising:
a control unit (104) including one or more processors configured to access one or more technical specifications (122) associated with a maintenance event of an aircraft (101), the maintenance event including one or more steps configured to be completed by an operator to complete the maintenance event; and
one or more sensors (108) configured to obtain data during the maintenance event of the aircraft (101), the data being associated with one or more of actions of the operator or one or more characteristics of the aircraft (101) during the maintenance event, the data including two or more different types of modalities,
wherein the control unit (104) is configured to monitor the maintenance event based at least in part on the data obtained by the one or more sensors (108) during the maintenance event and at least one of the one or more technical specifications (122).

2. The portable monitoring system (102) of claim 1, wherein the two or more different types of modalities includes one or more of video, text, audio, image, or touch.

3. The portable monitoring system (102) of claim 1 or 2, wherein the control unit (104) is configured to examine completion of the one or more steps of the maintenance event by the operator based on each of the two or more different types of modalities of the data.

4. The portable monitoring system (102) of any one of claims 1-3, further comprising an output device (110) operably coupled with the control unit (104), wherein the control unit (104) is configured to communicate with the operator during the maintenance event via the output device (110).

5. The portable monitoring system (102) of claim 4, wherein the control unit (104) is configured to communicate one or more instructions to the operator for the operator to complete one or more of the one or more steps of the maintenance event.

6. The portable monitoring system (102) of any one of claims 1-5, wherein the control unit (104) is configured to confirm the completion of the one or more steps of the maintenance event.

7. The portable monitoring system (102) of any one of claims 1-6, wherein the control unit (104) is configured to identify that at least one of the one or more steps of the maintenance event was completed incorrectly relative to a completion threshold of the at least one of the one or more technical specifications (122).

8. The portable monitoring system (102) of claim 7, further comprising an output device (110) operably coupled with the control unit (104), wherein the control unit (104) is configured to communicate a notification to the operator via the output device (110) responsive to identifying that the at least one of the one or more steps was completed incorrectly.

9. The portable monitoring system (102) of claim 8, wherein the notification is configured to include a corrective action recommendation for the operator to complete in order to remedy the at least one of the one or more steps that was completed incorrectly.

10. The portable monitoring system (102) of claim 8 or 9, wherein the at least one of the one or more steps that is completed incorrectly is a first step, wherein the control unit (104) is configured to communicate the notification to the operator responsive to the operator completing the first step incorrectly and prior to the operator starting a sequential second step.

11. The portable monitoring system (102) of any one of claims 1-10, wherein the one or more sensors (108) and the control unit (104) are operably coupled with a body, wherein the body is configured to be one or more of worn by or coupled to the operator during the maintenance event.

12. The portable monitoring system (102) of any one of claims 1, wherein the control unit (104) is an artificial intelligence (AI) or machine-learning system.

13. A method, comprising:
accessing one or more technical specifications (122) associated with one or more of a maintenance event of an aircraft (101);
obtaining data with one or more sensors (108) of the portable monitoring system (102) defined in claim 1 during the maintenance event of the aircraft (101), the data being associated with one or more of actions of an operator or one or more characteristics of the aircraft (101) during the maintenance event, the data including two or more different types of modalities; and
monitoring the maintenance event based at least in part on the data obtained by the one or more sensors (108) during the maintenance event and at least one of the one or more technical specifications (122).

14. The method of claim 13, further comprising examining completion of one or more steps of the maintenance event based on each of the two or more different types of modalities of the data.

15. The method of claim 13 or 14, further comprising:
identifying that at least one of one or more steps of the maintenance event was completed incorrectly relative to a completion threshold of the at least one of the one or more technical specifications (122); and
communicating a notification to the operator responsive to identifying that the at least one of the one or more steps was completed incorrectly.
